# EUROPÄISCHE PATENTSCHRIFT

(11) **EP 2 895 436 B1**
(45) Veröffentlichungstag und Bekanntmachung des Hinweises auf die Patenterteilung: **02.08.2017**
(21) Anmeldenummer: 13758787.9
(22) Anmeldetag: 27.08.2013
(51) Int. Cl.: C04B 18/16, C04B 20/02, B09B 3/00

(54) **VERFAHREN ZUR HERSTELLUNG VON ZUSCHLAG SOWIE VON KALZIUMCARBONAT AUS BETON-GESTEINSKÖRNUNG**
METHOD FOR PRODUCING AGGREGATE AND CALCIUM CARBONATE FROM CONCRETE COMPOSITE MATERIALS
PROCÉDÉ DE FABRICATION DE GRANULAT ET DE CARBONATE DE CALCIUM À PARTIR DE PARTICULES DE BÉTON

(30) Priorität: 14.09.2012 EP 12184415
(43) Veröffentlichungstag der Anmeldung: 22.07.2015
(73) Patentinhaber: Cemex Research Group AG, 2555 Brügg bei Biel (CH)
(72) Erfinder: ACHENBACH, Günther, 42929 Wermelskirchen (DE)
(74) Vertreter: Berkenbrink, Kai-Oliver
(86) Internationale Anmeldenummer: PCT/EP2013/067704
(87) Internationale Veröffentlichungsnummer: WO 2014/040852

(56) Entgegenhaltungen:
- WO-A1-93/08936
- WO-A1-96/35092
- WO-A1-2009/024826
- FR-A- 1 308 209
- DATABASE WPI Week 201056 Thomson Scientific, London, GB; AN 2010-J51073 XP002689728, -& KR 100 970 431 B1 (KOREA INST CONSTR TECHNOLOGY) 15. Juli 2010 (2010-07-15)
- DATABASE WPI Week 199342 Thomson Scientific, London, GB; AN 1993-331233 XP002689729, & JP 5 238790 A (SUMITOMO CEMENT CO) 17. September 1993 (1993-09-17)

## Beschreibung

Die Erfindung betrifft ein Verfahren zur Herstellung von Zuschlag sowie von Kalziumcarbonat aus Beton-Gesteinskörnung. Beton ist ein künstliches Gestein, das aus Zementstein und Zuschlagstoffen besteht. Die Zuschlagstoffe sind in eine Matrix aus Zementstein eingebettet beziehungsweise an den Zementstein gebunden.

Zuschlagstoffe (also insbesondere "Gesteinskörnung" im Sinne der DIN EN 12620:2011-03) in Beton können insbesondere Kies, Splitt, Schotter und/oder Sand sein.

Der Zementstein des Betons besteht aus erstarrtem Zement. Hauptbestandteile des Zementes sind neben Portlandzementklinker insbesondere einer oder mehrere der folgenden weiteren Bestandteile: Hüttensandmehl, Puzzolan, Flugasche oder Kalksteinmehl. Zur Bildung von Zementstein aus Zement, wird dieser mit Wasser vermischt, woraufhin dieses Gemisch nach einige Zeit erhärtet und erhärteten Zement, den sogenannten Zementstein bildet. Zur Herstellung von Beton werden Zement, Zuschlagstoffe und Wasser miteinander vermischt, so dass die Zuschlagstoffe nach dem Erhärten des Zementes in den Zementstein eingebunden sind.

Beton kann zu verschiedensten Zwecken als Baumaterial genutzt werden, beispielsweise im Hoch- und Tiefbau. Soweit Beton nach einer vorgesehenen Nutzungsdauer nicht mehr benötigt wird, kann er einer rezyklierten Nutzung zugeführt werden. Beispielsweise ist bekannt, Beton nach seiner primären Nutzung als Baumaterial zu zerkleinern und in dieser Form als rezyklierte Beton-Gesteinskörnung einer weiteren, sekundären Nutzung zuzuführen. Bei solch rezyklierter Gesteinskörnung handelt es sich jedoch in der Regel um keinen hochwertigen Roh- oder Baustoff, so dass dessen Verwendung als Roh- oder Baustoff regelmäßig eingeschränkt ist. Beispielsweise kann rezyklierte Beton-Gesteinskörnung zu geringen Teilen als Zuschlagsstoff in Beton oder im Straßenbau, beispielsweise als Frostschutz- oder Tragschicht verwendet werden. KR100970431B zeigt die Behandlung von rezykliertem Altbeton mit Kohlendioxid in einem Mischaggregat. Die vorliegende Erfindung hat es sich zur Aufgabe gemacht, Beton nach seiner primären Nutzung einer neuartigen, weiteren sekundären Nutzung zuzuführen. Insbesondere liegt der vorliegenden Erfindung die Aufgabe zugrunde, aus Beton nach seiner primären Nutzung hochwertige neue Rohstoffe zu gewinnen.

Überraschend hat sich im Rahmen der Erfindung herausgestellt, dass es möglich ist, aus Beton neue, hochwertige Rohstoffe zu gewinnen, die als hochwertige Baustoffe oder zur Herstellung von hochwertigen Baustoffen verwendet werden können.

Erfindungsgemäß wird zur Lösung der vorgenannten Aufgabe zur Verfügung gestellt ein Verfahren zur Herstellung von Zuschlag sowie von Kalziumcarbonat aus Beton-Gesteinskörnung, in Form von rezykliertem, zerkleinerten Beton, das die folgenden Merkmale umfasst:
- Eingabe von Beton-Gesteinskörnung umfassendem Schüttgut in einen Reaktionsraum;
- Zuleiten eines Kohlenstoffdioxid umfassenden Gases in den Reaktionsraum;
- Zerkleinern des Schüttgutes in dem Reaktionsraum;
- Reagierenlassen der Beton-Gesteinskörnung und des Kohlenstoffdioxid umfassenden Gases miteinander zu Reaktionsprodukten in dem Reaktionsraum;
- Ausführen der Reaktionsprodukte aus dem Reaktionsraum.

Die Erfindung beruht insbesondere auf der Erkenntnis, dass Beton-Gesteinskörnung bei kontinuierlicher Zerkleinerung und gleichzeitiger Beaufschlagung mit Kohlenstoffdioxid umfassendem Gas Reaktionsprodukte bildet, die insbesondere auch Kalziumcarbonat sowie Zuschlagstoffe umfassen.

Bei dem Reagierenlassen der Beton-Gesteinskörnung mit dem Kohlenstoffdioxid des Kohlenstoffdioxid umfassenden Gases kommt es insbesondere auch zu einer Carbonatisierung der Beton-Gesteinskörnung, bei der carbonatisierbare Anteile des Zementsteins der Beton-Gesteinskörnung durch das Kohlenstoffdioxid carbonatisiert werden. Bei den carbonatisierbaren Anteilen des Zementsteins handelt es sich insbesondere um Anteile an Kalziumoxid (CaO) der CSH-Phasen des Zementsteins. Durch die kontinuierliche Zerkleinerung der Beton-Gesteinskörnung während der Beaufschlagung der Beton-Gesteinskörnung mit dem Kohlenstoffdioxid umfassenden Gas bildet die Gesteinskörnung ständig neue Oberflächen, die mit dem Kohlenstoffdioxid beaufschlagt werden können. Hierdurch ist es möglich, dass die carbonatisierbaren Anteile der Beton-Gesteinskörnung umfassend mit Kohlenstoffdioxid beaufschlagt werden, so dass eine sehr weitgehende Carbonatisierung der carbonatisierbaren Anteile der Beton-Gesteinskörnung möglich ist. Ferner wurde erfindungsgemäß überraschender Weise festgestellt, dass die Zerkleinerung der Beton-Gesteinskörnung bei gleichzeitiger Beaufschlagung mit Kohlenstoffdioxid dazu führt, dass sich die Zuschlagstoffe der Beton-Gesteinskörnung sehr leicht aus der Zementsteinmatrix lösen. Offensichtlich liegt dies daran, dass sich der mit Kohlenstoffdioxid beaufschlagte, carbonatisierte Zementstein wesentlich leichter von den Zuschlagstoffen der Beton-Gesteinskörnung löst als der nicht carbonatisierte Zementstein.

Im Ergebnis umfassen die Reaktionsprodukte damit insbesondere auch wesentliche Anteile an Kalziumcarbonat und Zuschlagstoffen, wobei beide Stoffe weitgehend nicht aneinander oder an sonstige Stoffe gebunden vorliegen können. Die Zuschlagstoffe der Beton-Gesteinskörnung können damit insbesondere weitgehend lose in den Reaktionsprodukten vorliegen.

Durch das erfindungsgemäße Verfahren kann man damit zum einen hochwertige Zuschlagstoffe in Form im wesentlichen reiner Zuschlagstoffe, die in die für das Verfahren eingesetzten Beton-Gesteinskörnung eingebunden waren, erhalten. Die durch das erfindungsgemäße Verfahren erhaltenen Zuschlagstoffe können beispielsweise wiederum als hochwertige Zuschlagstoffe für die Erstellung von Beton verwendet werden.

Zum zweiten erhält man durch das erfindungsgemäße Verfahren Kalziumcarbonat, das aus dem Zementstein der Beton-Gesteinskörnung gebildet wird. Das erhaltene Kalziumcarbonat kann beispielsweise zu Kalziumoxid kalziniert und anschließend als Bindemittel eingesetzt werden.

Erfindungsgemäß wurde festgestellt, dass Kohlenstoffdioxid besonders umfangreich und schnell an Kalziumoxid von Beton-Gesteinskörnung gebunden wird, soweit man Gesteinskörnung und Kohlenstoffdioxid umfassendes Gas in einem Temperaturbereich von 60° bis 95° C, insbesondere in einem Temperaturbereich von 70° bis 80° C miteinander reagieren lässt. Der Reaktionsraum einer zur Durchführung des erfindungsgemäßen Verfahrenes verwendeten Vorrichtung kann daher insbesondere für Temperaturen von wenigstens 60° C oder von wenigstens 70° C ausgebildet sein.

Bei dem Schüttgut handelt es sich um ein schüttbares, im Wesentlichen körniges Gut. Erfindungsgemäß wurde festgestellt, dass bereits geringe Anteile bestimmter Stoffe im Schüttgut, die nicht Beton-Gesteinskörnung sind, die Bildung von Zuschlagstoffen und Kalziumcarbonat aus der Beton-Gesteinskörnung durch das erfindungsgemäße Verfahren behindern oder auch gänzlich unterdrücken können. Aus diesem Grund umfasst das Schüttgut bevorzugt überwiegend Beton-Gesteinskörnung. Besonders bevorzugt umfasst das Schüttgut zu wenigstens 90 Masse-% Beton-Gesteinskörnung, also beispielsweise auch zu wenigstens 95 Masse-%, 98 Masse-% oder 99 Masse-%, jeweils bezogen auf die Gesamtmasse des Schüttgutes. Nach einer Ausführungsform ist vorgesehen, dass das Schüttgut ausschließlich Beton-Gesteinskörnung umfasst, also ausschließlich aus Beton-Gesteinskörnung gebildet ist.

Unter Beton-Gesteinskörnung im Sinne der vorliegenden Erfindung wird insbesondere rezyklierter, zerkleinerter Beton verstanden, also Beton, der nach seiner primären Nutzung, beispielsweise im Hoch- oder Tiefbau, zerkleinert worden ist, um ihn einer weiteren, sekundären Nutzung zuzuführen. Die Beton-Gesteinskörnung ist gebildet aus den typischen Komponenten eines Betons, also Zuschlagstoffen und Zementstein. Dabei bildet der Zementstein eine Matrix, in die die Zuschlagstoffe eingebunden sind. Der Zementstein ist gebildet aus den typischen Komponenten eines erhärteten Zements, also im Wesentlichen aus Calciumsilikathydratphasen (CSH-Phasen) neben weiteren Komponenten, wie beispielsweise insbesondere Kalziumhydroxid und Ettringit.

Das Schüttgut kann bei dessen Eingabe in den Reaktionsraum bevorzugt in einer Korngröße im Bereich > 0 bis 32 mm vorliegen. Erfindungsgemäß wurde festgestellt, dass Schüttgut in einem entsprechenden Korngrößenbereich zum einen in einer ausreichend geringen Korngröße vorliegt, um eine möglichst große Oberfläche zu schaffen, so dass die Beton-Gesteinskörnung des Schüttgutes gut mit dem Kohlenstoffdioxid des Kohlenstoffdioxid umfassenden Gases reagieren und der Zement der Beton-Gesteinskörnung durch das Kohlenstoffdioxid carbonatisiert werden kann. Desweiteren ist das Schüttgutes bei einer entsprechenden Korngröße jedoch groß genug, um im Reaktor in Form eines lockeren Schüttgutes vorzuliegen, so dass der Reaktionsraum regelmäßig nicht durch das Schüttgut verstopft wird oder das Schüttgut verklumpt und damit nur schwer zu zerkleinern wäre. Bevorzugt liegt das Schüttgut in einer Korngröße vollständig oder weitgehend in einer Korngröße über 0,1 mm, 1 mm oder über 2 mm vor, beispielsweise in einer Korngröße d₉₀ größer 0,1 mm, 1 mm oder 2 mm. Der Vorteil einer entsprechend groben Körnung, die vollständig oder weitgehend frei von mehlfeinen Bestandteilen ist, liegt auch darin, dass zur Zerkleinerung des Betons weniger Energie aufzuwenden ist. Beispielsweise kann das Schüttgut in einer Korngröße im Bereich von 2 bis 22 mm vorliegen, wobei das Schüttgut beispielsweise in eng gestuften Korngruppen vorliegen kann, beispielsweise in Korngruppen von 2 bis 8 mm, von 8 bis 16 mm und/oder von 16 bis 22 mm.

Es kann vorgesehen sein, eine Beton-Gesteinskörnung mit einem spezifischen Hohlraumvolumen einzusetzen. Beispielsweise kann die Beton-Gesteinskörnung ein Hohlraumvolumen im Bereich von 10 bis 40 Vol.-%, also beispielsweise auch im Bereich von 15 bis 32 Vol.-% aufweisen. Bei einem entsprechenden Hohlraumvolumen lässt sich Beton-Gesteinskörnung sehr vorteilhaft carbonatisieren.

Erfindungsgemäß hat sich herausgestellt, dass die Carbonatisierung des Zementsteines der Beton-Gesteinskörnung des Schüttgutes während des Reagierenlassens der Beton-Gesteinkörnung mit dem Kohlenstoffdioxid verstärkt abläuft, wenn die Betongesteinskörnung während des Reagierenlassens mit dem Kohlenstoffdioxid mit Wasser befeuchtet und insbesondere weitgehend oder vollständig mit Wasser getränkt ist. Beispielsweise kann vorgesehen sein, dass das Schüttgut, insbesondere während des Zerkleinerns und/oder des Reagierenlassens derart mit Wasser getränkt ist beziehungsweise mit Wasser getränkt wird, dass die Beton-Gesteinskörnung zu wenigstens 50 %, also beispielsweise auch zu wenigstens 60 %, 70 %, 80 % und besonders bevorzugt zu wenigstens 90 %, 95 % oder 99 % und beispielsweise auch zu praktisch 100 %, bezogen auf die zur vollständigen Sättigung der Beton-Gesteinskörnung mit Wasser notwendigen Wasser an Wasser, mit Wasser gesättigt ist. Bei einer Tränkung der Gesteinskörnung zu wenigstens 99 % oder 100 % mit Wasser, ist die Beton-Gesteinskörnung praktisch bis an ihre Sättigungsgrenze mit Wasser gesättigt.

Zur Erreichung einer solch hohen Tränkung der Beton-Gesteinskörnung mit Wasser kann vorgesehen sein, dass Schüttgut im Reaktor, insbesondere während des Zerkleinerns und/oder Reagierenlassens im Reaktor, durch ein Wasserbad zu bewegen. Beispielsweise kann vorgesehen sein, dass Schüttgut im Reaktor, insbesondere auch während des Zerkleinerns und/oder Reagierenlassens mit dem Kohlenstoffdioxid, kontinuierlich in das Wasserbad hinein und wieder aus diesem heraus zu bewegen. Hierdurch ist gewährleistet, dass die Beton-Gesteinskörnung während des Reagierenlassens mit dem Kohlenstoffdioxid ständig im gewünschten Umfang mit Wasser getränkt ist.

Bevorzugt kann vorgesehen sein, dass das Reagierenlassen der Beton-Gesteinskörnung mit dem Kohlenstoffdioxid des Kohlenstoffdioxid umfassenden Gases im Reaktionsraum bei erhöhter Temperatur stattfindet. Beispielsweise kann vorgesehen sein, dass dem Reaktionsraum während des Reagierenlassens der Beton-Gesteinskörnung mit dem Kohlenstoffdioxid thermische Energie zugeführt wird. Nach einer bevorzugten Ausführungsform ist vorgesehen, dass man die Beton-Gesteinskörnung mit dem Kohlenstoffdioxid bei einer Temperatur von wenigstens 60° C reagieren lässt. Erfindungsgemäß wurde festgestellt, dass die Carbonatisierung des Zementsteins der Beton-Gesteinskörnung verstärkt und insbesondere auch schneller abläuft, soweit man die Beton-Gesteinskörnung unter einer entsprechend höheren Temperatur mit Kohlenstoffdioxid reagieren lässt. Erfindungsgemäß wurde festgestellt, dass sich die Carbonatisierung des Zementsteines der Beton-Gesteinskörnung verlangsamt, wenn die Temperaturen beim Reagierenlassen über 90° C liegen. Gegebenenfalls liegt dies daran, dass Wasseranteile im Zementstein der Beton-Gesteinskörnung bei Temperaturen ab 90° C verstärkt verdampfen und der für eine Carbonatisierung vorteilhafte Wasseranteil im Zementstein damit in geringerem Maße vorhanden ist. Besonders bevorzugt lässt man die Beton-Gesteinskörnung mit dem Kohlenstoffdioxid bei Temperaturen von wenigstens 65° C oder von wenigstens 70° C reagieren. Ferner kann vorgesehen sein, dass man die Beton-Gesteinskörnung und das Kohlenstoffdioxid bei Temperaturen von höchstens 90° C, 85° C oder 80° C reagieren lässt.

Die etwaige Zuführung von thermischer Energie in den Reaktionsraum, um die Beton-Gesteinskörnung bei den vorgenannten Temperaturen mit dem Kohlenstoffdioxid reagieren zu lassen, kann beispielsweise über Heizmittel erfolgen. Nach einer besonders bevorzugten Ausführungsform ist jedoch vorgesehen, dass dem Reaktionsraum als Kohlenstoffdioxid umfassendes Gas ein Kohlenstoffdioxid umfassendes Verbrennungsgas, insbesondere ein Kohlenstoffdioxid umfassendes heißes Verbrennungsgas zugeleitet wird. Die Verwendung eines solchen Verbrennungsgases als Kohlenstoffdioxid umfassendes Gas hat mehrere erhebliche Vorteile. Zum einen kann die thermische Energie eines heißen Verbrennungsgases genutzt werden, um die Carbonatisierung des Zementsteines der Beton-Gesteinskörnung, wie zuvor beschrieben, beschleunigt ablaufen zu lassen. Aus diesem Grund kann vorgesehen sein, dass Verbrennungsgas im Reaktionsraum in einem solchen Temperaturbereich zuzuführen, dass die Reaktion zwischen der Beton-Gesteinskörnung und dem Kohlenstoffdioxid des Verbrennungsgases im Bereich der vorgenannten Temperaturen stattfindet. Die Verwendung eines heißen Verbrennungsgases ist unter energetischen Gesichtspunkten äußerst günstig, da zusätzliche Energiekosten zur Zuführung von thermischer Energie in den Reaktionsraum gespart werden können. Ferner ist die Verwendung von Verbrennungsgas als Kohlenstoffdioxid umfassendes Gas auch unter Umweltgesichtspunkten äußerst vorteilhaft, da das Kohlenstoffdioxid des Verbrennungsgases durch die Carbonatisierung des Zementsteins zumindest teilweise gebunden wird und die Umwelt dadurch mit diesem gebundenen Anteil an Kohlenstoffdioxid nicht belastet wird.

Nach einer Ausführungsform kann vorgesehen sein, dass das Verbrennungsgas im Reaktionsraum unmittelbar von dem Verbrennungsprozess beziehungsweise unmittelbar von dem Aggregat, an dem das Verbrennungsgas entsteht, zugeleitet wird. Hierdurch kann ein geschlossenes System geschaffen werden, bei dem das bei dem Verbrennungsprozess im Aggregat entstandene Kohlenstoffdioxid aufgefangen und durch das erfindungsgemäße Verfahren durch eine Carbonatisierung gebunden werden kann.

Als Kohlenstoffdioxid umfassende Verbrennungsgase können beispielsweise Verbrennungs- oder Abgase aus einem Aggregat in Form eines Zement-Drehrohrofens, eines Kalzinierofens, eines Kalkbrennofens oder eines fossilen Kraftwerkes sein, beispielsweise eines Gas-, Öl- oder Kohlekraftwerkes. Nach einer bevorzugten Ausführungsform ist vorgesehen, dass das erfindungsgemäße Verfahren kontinuierlich durchgeführt wird. Demnach kann vorgesehen sein, dass das Schüttgut kontinuierlich in den Reaktionsraum eingegeben, kontinuierlich Kohlenstoffdioxid umfassendes Gas in den Reaktionsraum geleitet, das Schüttgut in dem Reaktionsraum kontinuierlich zerkleinert und mit dem Gas reagieren gelassen wird und die Reaktionsprodukte schließlich kontinuierlich aus dem Reaktionsraum ausgeführt werden. Durch ein solch kontinuierliches Verfahren lassen sich Reaktionsprodukte aus dem Schüttgut sehr wirtschaftlich und gleichförmig herstellen.

Nach einer besonders bevorzugten Ausführungsform ist vorgesehen, dass das Schüttgut und das Kohlenstoffdioxid umfassende Gas entgegengesetzt durch den Reaktionsraum geleitet werden. Das Schüttgut und das Kohlenstoffdioxid umfassende Gas werden demnach in entgegengesetzten Strömungsrichtungen durch den Reaktionsraum geleitet. Ein solcher Verfahrensschritt hat den Vorteil, dass das Schüttgut gleichmäßig und kontinuierlich in Kontakt mit dem Kohlenstoffdioxid des Kohlenstoffdioxid umfassenden Gases tritt, so dass die Beton-Gesteinskörnung gleichmäßig und umfassend mit dem Kohlenstoffdioxid reagieren kann. Beispielsweise kann vorgesehen sein, das Schüttgut einerseits und das Kohlenstoffdioxid umfassende Gas andererseits an gegenüberliegenden Öffnungen dem Reaktionsraum zuzuleiten beziehungsweise aus diesem auszuführen.

In dem Reaktionsraum wird das Schüttgut zerkleinert. Insbesondere kann vorgesehen sein, dass das Schüttgut während des Reagierenlassens der Beton-Gesteinskörnung mit dem Kohlenstoffdioxid des Kohlenstoffdioxid umfassenden Gase im Reaktionsraum zerkleinert wird, insbesondere während dieses Reagierenlassen kontinuierlich zerkleinert wird. Dies hat, wie oben ausgeführt, insbesondere den Vorteil, dass durch die Zerkleinerung kontinuierlich neue Oberflächen der Beton-Gesteinskörnung geschaffen werden, an denen der Zementstein der Beton-Gesteinskörnung mit dem Kohlenstoffdioxid reagieren und insbesondere carbonatisieren kann. Bevorzugt kann vorgesehen sein, dass die Zerkleinerung abrasiv durchgeführt wird, wobei die Beton-Gesteinskörnung oberflächlich beschädigt beziehungsweise abgetragen wird. Zur Zerkleinerung des Schüttgutes beziehungsweise der Betongesteinskörnung des Schüttgutes kann beispielsweise vorgesehen sein, dass das Schüttgut in einer sich drehenden Trommel oder einem sich drehenden Rohr zerkleinert wird.

Beispielsweise kann das erfindungsgemäße Verfahren in einem Drehrohrofen durchgeführt werden. Bekanntermaßen handelt es sich bei einem Drehrohrofen um einen rohr- beziehungsweise trommelförmigen Ofen, der um seine Längsachse drehbar ist. Die Längsachse kann insbesondere schräg zur Horizontalen geneigt sein. Während der Behandlung des in einem Drehrohrofen zu behandelnden Gutes wird das Drehrohr um seine Längsachse gedreht und das zu behandelnde Gut am höher gelegenen Ende des Drehrohres in das Innere des Drehrohres, den Ofenraum eingegeben. Durch die Drehbewegung und die geneigte Stellung des Drehrohres bewegt sich das im Drehrohrofen zu behandelnde Gut vom oberen Ende des Drehrohres zum unteren Ende des Drehrohres, an dem es aus dem Drehrohrofen ausgeführt werden kann. Gleichzeitig wird das in dem Drehrohrofen zu behandelnde Gut durch die Drehbewegung zerkleinert beziehungsweise an seiner Oberfläche kontinuierlich beschädigt. Erfindungsgemäß kann nunmehr vorgesehen sein, dass der Reaktionsraum der Ofenraum eines Drehrohrofens ist. Durch die Drehung des Drehrohrofens wird das Schüttgut damit kontinuierlich zerkleinert, während es durch den Ofenraum des Drehrohrofens geführt wird. Zur Verstärkung der Zerkleinerung des Schüttgutes im Ofenraum des Drehrohrofens kann vorgesehen sein, dass der Ofenraum Vorsprünge aufweist, beispielsweise in Form von Rippen, Platten, Stegen oder Noppen. Während der Drehung des Drehrohrofens tragen diese Vorsprünge zu einer verstärkten Zerkleinerung der Beton-Gesteinskörnung bei.

Ein Vorteil bei der Durchführung des erfindungsgemäßen Verfahrens an einem Drehrohrofen liegt darin, dass das Verfahren in einem Drehrohrofen kontinuierlich durchführbar ist. Ein weiterer Vorteil besteht darin, dass das Schüttgut und das Kohlenstoffdioxid umfassende Gas in einem Drehrohrofen besonders einfach in entgegengesetzten Strömungsrichtungen durch den Reaktionsraum beziehungsweise dem Ofenraum führbar sind. So kann das Schüttgut am oberen Ende in den Ofenraum des Drehrohrofens eingeführt und am tieferen Ende aus dem Ofenraum abgezogen werden, während das Kohlenstoffdioxid umfassende Gas am tieferen Ende in den Ofenraum eingeleitet und am höheren Ende aus dem Ofenraum abgezogen wird.

Ein weiterer wesentlicher Vorteil der Verwendung eines Drehrohrofens zur Durchführung des erfindungsgemäßen Verfahrens liegt darin, dass das Schüttgut im Ofenraum des Drehrohres kontinuierlich durch ein Wasserbad führbar ist. Beispielsweise kann vorgesehen sein, den Ofenraum des Drehrohrofens teilweise mit Wasser zu befüllen, so dass das Schüttgut bei der Drehung des Drehrohrofens kontinuierlich in dieses Wasserbad hinein und wieder aus diesem hinaus geführt wird. Der Drehrohrofen ist dabei derart ausgebildet, dass ein Auslaufen des Wassers am unteren Ende des Drehrohres verhindert ist. Beispielsweise kann das untere Ende des Drehrohres eine Blende aufweist, also eine radial nach innen weisenden Wandung, die mittig offen ist. Diese Wandung beziehungsweise Blende hält ein im Ofeninnenraum ausgebildetes Wasserbad zurück und lässt mittig eine Öffnung zum Ausleiten der Reaktionsprodukte aus dem Ofeninnenraum frei.

Nach einer alternativen Ausführungsform kann das erfindungsgemäße Verfahren beispielsweise in einem Schachtofen durchgeführt werden. Dabei kann das die Beton-Gesteinskörnung umfassende Schüttgut, entsprechend zu kalzinierendem Kalkstein, kopfseitig in den Schachtofen eingegeben und die Reaktionsprodukte fußseitig aus dem Schachtofen ausgeführt werden. Ferner kann Kohlendioxid umfassendes Gas entgegensetzt durch den Schachtofen geleitet werden, also fußseitig in den Schachtofen eingeleitet und kopfseitig aus diesem abgezogen werden. Erfindungsgemäß hat sich herausgestellt, dass das erfindungsgemäße Verfahren besonders vorteilhaft bei einem Schachtofen durchführbar ist, wenn dieser beispielsweise ein Höhen-Durchmesserverhältnis im Bereich von 2 bis 3 aufweist. Ferner kann der im Inneren des Schachtofens ausgebildete Reaktionsraum fußseitig sich konisch nach außen erweiternd ausgebildet sein. Hierdurch kann ein Zusetzen des Schachtofens durch das Schüttgut verhindert werden. Das erfindungsgemäße Verfahren kann in einer Vorrichtung in Form eines Drehrohrofens durchgeführt werden, der um seine schräg zur horizontalen stehenden Ofenachse drehbar ist, an seinem oberen Ende eine Einlassöffnung zur Eingabe des Schüttgutes in den als Reaktionsraum ausgebildeten Ofenraum aufweist und an seinem unteren Ende eine Auslassöffnung zum Ausführen der Reaktionsprodukte aus dem Ofenraum aufweist, wobei der Ofenraum derart konfektioniert ist, dass in diesem ein Wasserbad ausbildbar ist, durch dass das Schüttgut, insbesondere während des Zerkleinerns dieses Schüttgutes und/oder des Reagierenlassen der Betongesteinskörnung mit dem Kohlenstoffdioxid des Kohlenstoffdioxid umfassenden Gases, führbar ist.

In Übrigen kann der Drehrohrofen derart ausgebildet sein, dass durch diesen das hierin beschriebene, erfindungsgemäße Verfahren durchführbar ist. Weitere Merkmale der Erfindung ergeben sich aus den Unteransprüchen, der beigefügten Figur sowie der zugehörigen Figurenbeschreibung.

Sämtliche Merkmale der Erfindung, können, einzeln oder in Kombination, beliebig miteinander kombiniert sein.

Ein Ausführungsbeispiel eines erfindungsgemäßen Verfahrens soll anhand der nachfolgenden Figurenbeschreibung näher erläutert werden.

Im Ausführungsbeispiel zeigt, stark schematisiert,

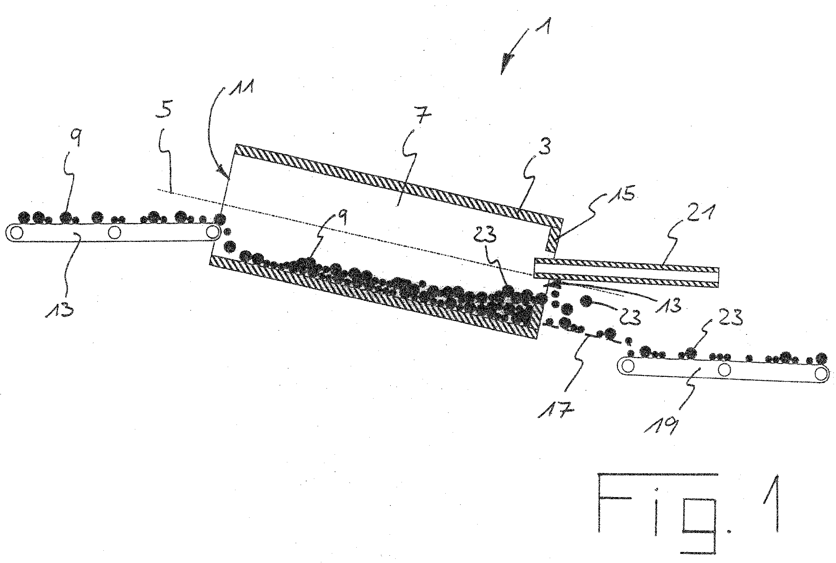

- Figur 1: eine seitliche Schnittansicht durch einen erfindungsgemäß verwendbaren Drehrohrofen.

Der in seiner Gesamtheit mit dem Bezugszeichen 1 gekennzeichnete Drehrohrofen umfasst ein drehbares Drehrohr 3. Das Drehrohr 3 ist im Wesentlichen wie ein Drehrohr eines bekannten Zement-Drehrohrofens aufgebaut und weist damit im Wesentlichen insgesamt die Form eines zylindrischen Rohres auf. Das Drehrohr 3 ist um seine schräg zur Horizontalen stehende Ofenlängsachse 5 drehbar.

Der Ofenraum 7 des Drehrohres 3 ist als Reaktionsraum zur Aufnahme von Beton-Gesteinskörnung umfassendem Schüttgut 9 ausgebildet. An seinem oberen, einlaufseitigen Ende weist das Drehrohr 3 eine Einlassöffnung 11 und an seinem gegenüberliegenden, tieferen Ende eine Auslassöffnung 13 auf. Durch die Einlassöffnung 11 ist Beton-Gesteinskörnung umfassendes Schüttgut 9 in den Ofenraum 7 einführbar. Im Ausführungsbeispiel wird das Schüttgut 9 mittels eines Bandförderers 13 in die Einlassöffnung 11 eingeführt. Durch die Auslassöffnung 13 sind im Reaktionsraum 7 gebildete Reaktionsprodukte 23 aus dem Ofenraum 7 ausführbar.

Im Ausführungsbeispiel besteht das Schüttgut 9 zu praktisch 100 Masse-% aus Beton-Gesteinskörnung in einer Körnung von 2 bis 22 mm.

Das Drehrohr 3 weist an seinem unteren Ende eine Blende 15 auf, die sich ringförmig vom Drehrohr 3 radial nach innen erstreckt, wobei mittig die Auslassöffnung 13 freigelassen ist. Das Drehrohr 3 ist teilweise mit Wasser gefüllt. Ein Herauslaufen des Wassers am unteren Ende des Drehrohrs 3 ist durch die Blende 15 verhindert.

Unterhalb der Auslassöffnung 13 ist ein Rost 17 mit Neigung angeordnet. Am unteren Ende des Rostes 17 schließt sich ein Bandförderer 19 an den Rost 17 an. Rost 17 und Bandförderer 19 sind derart ausgebildet, dass aus der Auslassöffnung 13 ausführbare beziehungsweise herausfallende Reaktionsprodukte 23 über den Rost 17 auf den Bandförderer 19 rutschen und vom Bandförderer 19 anschließend abtransportiert werden können.

In die Auslassöffnung 13 mündet ein Rohr 21, durch das Kohlenstoffdioxid umfassendes Verbrennungsgas in den Ofenraum 7 leitbar. Das Rohr 21 ist unmittelbar strömungstechnisch mit einem (nicht dargestellten) Verbrennungsgasabzug zum Abziehen von Kohlenstoffdioxid umfassenden Verbrennungsgasen eines Aggregates verbunden.

Ein erfindungsgemäßes Verfahren kann durch den Drehrohrofen 1 gemäß Figur 1 wie folgt durchgeführt werden.

Zunächst wird das Schüttgut 9 über den Bandförderer 13 durch die Einlassöffnung 11 in den Ofenraum 7 des Drehrohres 3 eingegeben. Auf Grund der Neigung und Drehung des Drehrohres 3 um seine Längsachse 5 bewegt sich das Schüttgut 9 vom Bereich der Einlassöffnung 11 abwärts in Richtung der Auslassöffnung 13. Während dieses Durchleitens des Schüttgutes 9 durch den Ofenraum 7 wird kontinuierlich Kohlenstoffdioxid umfassendes Verbrennungsgas durch das Rohr 21 in den Ofenraum 7 geleitet. Hierdurch tritt die Beton-Gesteinskörnung des Schüttgutes 9 in Kontakt mit dem Kohlenstoffdioxid des zugeleiteten Verbrennungsgases. Die Kohlenstoffdioxid umfassenden Verbrennungsgase werden dem Ofeninnenraum 7 mit einer Temperatur von etwa 75° C zugeleitet, so dass die Beton-Gesteinskörnung des Schüttgutes 9 im Ofeninnenraum 7 bei dieser Temperatur in Reaktion mit dem Kohlenstoffdioxid gebracht wird. Das Kohlenstoffdioxid umfassende Verbrennungsgas wird, wie zuvor ausgeführt, im Bereich der Auslassöffnung 13 in den Ofenraum 7 eingeleitet, anschließend durch den Ofenraum 7 hindurchgeleitet und schließlich durch die Einlassöffnung 11 wieder aus diesem abgezogen. Das abgezogene Gas kann aufgefangen und anschließend weiter behandelt werden.

Bei dem Reagierenlassen der Beton-Gesteinskörnung 9 mit dem Kohlenstoffdioxid der Verbrennungsgase reagiert Kohlenstoffdioxid der Verbrennungsgase mit dem Zementstein der Beton-Gesteinskörnung 9, wobei insbesondere Kalziumoxid der CSH-Phasen des Zementsteins zu Kalziumcarbonat carbonatisiert wird. Diese Reaktion wird im Ausführungsbeispiel durch drei Faktoren wesentlich begünstigt: Zum einen durch die Temperatur von 75°C, bei der die Reaktion stattfindet. Zum zweiten durch die Drehung des Drehrohres 3, durch welche die Beton-Gesteinskörnung des Schüttgutes 9 kontinuierlich zerkleinert wird und hierdurch immer wieder neue Oberflächen bildet, die mit dem Kohlenstoffdioxid reagieren können. Zum dritten wird die Reaktion dadurch begünstigt, dass das Schüttgut 9 während des Reagierenlassens fortlaufend durch das Wasserbad geführt wird, so dass die Beton-Gesteinskörnung nahezu zu 100 % mit Wasser getränkt ist.

Schließlich reagiert die Beton-Gesteinskörnung des Schüttgutes 9 mit dem Kohlenstoffdioxid der Verbrennungsgase zu Reaktionsprodukten 23. Diese Reaktionsprodukte umfassen im wesentlichen Kalziumcarbonat und lose Zuschlagstoffe.

Durch das fortlaufende Beschicken des Ofeninnenraums 7 mit weiterem Schüttgut 9 und die Drehung des Drehrohres 3 fallen diese Reaktionsprodukte 23 kontinuierlich durch die Auslassöffnung 13 auf den darunter angeordneten Rost 17 und rutschen über diesen weiter auf den Bandförderer 19, der sie abtransportiert, woraufhin die Reaktionsprodukte 23 weiter verarbeitet werden können.

Das Schüttgut 9 einerseits und das Kohlenstoffdioxid umfassende Verbrennungsgas andererseits werden, wie sich aus der Figurenbeschreibung ergibt, gegenläufig durch den Ofenraum 7 geleitet.

Zur Untersuchung, inwieweit die Bewegung des Schüttgutes 9 während des Zerkleinerns und Reagierenlassens durch ein Wasserbad sich auf die Reaktion der Beton-Gesteinskörnung mit Kohlenstoffdioxid auswirkt, wurden Versuche durchgeführt, deren Ergebnisse in Tabelle 1 wiedergegeben sind. Insgesamt wurden die Versuche an den zwölf in Tabelle 1 angegebenen Proben durchgeführt.

Konkret wurde bei den Versuchen Beton-Gesteinskörnung unterschiedlicher Körnung und mit unterschiedlichen Zementen in einen Reaktionsraum in Form eines Zement-Drehrohrofens eingegeben und im Gegenstrom mit Kohlenstoffdioxid beaufschlagt. Durch die Drehung des Zement-Drehrohrofens wurde die Beton-Gesteinskörnung zerkleinert. Gleichzeitig war bei den Proben 7-12 ein Wasserbad im Zement-Drehrohrofen ausgebildet, durch welches die Beton-Gesteinskörnung während des Zerkleinerns und der Beaufschlagung mit Kohlenstoffdioxid bewegt wurde. Anschließend wurden die Reaktionsprodukte aus dem Zement-Drehrohrofen ausgeführt. Demgegenüber war bei Proben 1 bis 6 während des Zerkleinerns und Reagierenlassens kein Wasserbad im Drehrohrofen ausgebildet.

In den Spalten der Tabelle 1 sind die folgenden Angaben gemacht:
In der mit "Körnung" bezeichneten Spalte ist die Körnung der entsprechenden Probe beziehungsweise Beton-Gesteinskörnung bei Eingabe in den Zement-Drehrohrofen in mm angegeben.

Die mit "Zement" überschriebene Spalte gibt den zur Erstellung des Betons, aus dem die Beton-Gesteinskörnung gebildet ist, eingesetzten Zement an.

In der mit "Rohdichte der Probe" überschriebenen Spalte ist die Rohdichte der jeweiligen Probe in kg/dm³ angegeben.

Die mit "Wasseraufnahme der Probe" bezeichnete Spalte gibt die maximal mögliche Wasseraufnahme der jeweiligen Probe an (in Masse-% Wasser bezogen auf 100 Masse-% der jeweiligen Probe ohne aufgenommenes Wasser).

In der mit "CO₂-Aufnahme" überschriebenen Spalte ist die Masse an Kohlenstoffdioxid angegeben, die die jeweilige Probe bei Durchführung des Verfahrens aufgenommen hat (in Masse-% Kohlenstoffdioxid bezogen auf 100 Masse-% der jeweiligen Probe ohne aufgenommenes Kohlenstoffdioxid).

In der mit "reagierter CaO-Anteil" überschriebenen Spalte ist die Masse an CaO der jeweiligen Probe angegeben, die während der Durchführung des Verfahrens mit Kohlenstoffdioxid reagiert hat (in Masse-% CaO bezogen auf 100 Masse-% der jeweiligen Probe einschließlich ihres Anteils an CaO).

In der mit "Anteil an CaO" überschriebenen Spalte ist der Anteil an CaO angegeben, der während des Verfahrens mit dem Kohlenstoffdioxid reagiert hat (in Masse-% CaO bezogen auf die Gesamtmasse an CaO der jeweiligen Probe).

In der mit "Rohdichte des Reaktionsproduktes" überschriebenen Spalte ist die Rohdichte der nach Durchführung des Verfahrens jeweils erhaltenen Reaktionsprodukte angegeben (in kg/dm³).

In der mit "Wasseraufnahme des Reaktionsproduktes" überschriebenen Spalte ist die Dichte der nach Durchführung des Verfahrens aus den jeweiligen Proben erhaltenen Reaktionsprodukte angegeben (in Masse-% Wasser bezogen auf 100 Masse-% der jeweiligen Reaktionsprodukte).

Tabelle 1 lässt deutlich erkennen, dass das Bewegen der Reaktionsprodukte durch ein Wasserbad während des Zerkleinerns der Beton-Gesteinskörnung und deren Reagierenlassens mit Kohlenstoffdioxid dazu führt, dass ein wesentlich höherer Anteil an CaO der Beton-Gesteinskörnung mit Kohlenstoffdioxid reagiert. So reagierten beispielsweise bei Probe 10 bis zu 56,6 % des Anteils an CaO der Beton-Gesteinskörnung mit Kohlenstoffdioxid. Demgegenüber reagierten bei den Versuchen gemäß den Proben 1 bis 6 maximal 39,1 % des Anteils an CaO der Beton-Gesteinskörnung mit Kohlenstoffdioxid.

Durchschnittlich reagierte bei den Versuchen gemäß den Proben 7 bis 12 ein Anteil von 43,7 % des CaO der Proben mit Kohlenstoffdioxid, während dies bei den Versuchen mit den Proben 1 bis 6 nur etwa 21,9 % waren.

Diese Versuchsdurchführung zeigt, dass das Bewegen der Beton-Gesteinskörnung durch ein Wasserbad während des Zerkleinerns und Reagierenlassens der Beton-Gesteinskörnung mit dem Kohlenstoffdioxid dazu führt, dass ein wesentlich höherer Anteil an CaO der Beton-Gesteinskörnung mit Kohlenstoffdioxid führt als bei den Versuchen, bei denen die Proben nicht durch ein Wasserbad bewegt wurden.

**Tabelle 1**

| Probennummer | Körnung (mm) | Zement | Rohdichte der Probe (kg/dm³) | Wasseraufnahme der Probe (%) | CO₂-Aufnahme (%) | reagierter CaO-Anteil der Probe (%) | Anteil an CaO (%) | Rohdichte des Reaktionsproduktes (kg/dm³) | Wasseraufnahme des Reaktionsproduktes (%) |
|---|---|---|---|---|---|---|---|---|---|
| 1 | > 0-4 | CEM I 52,5 | 2,3 | n.d. | 4,0 | 5,1 | 39,1 | n.d. | n.d. |
| 2 | > 4-8 | CEM I 52,5 | 2,3 | 8,9 | 1,8 | 2,2 | 17,2 | n.d. | n.d. |
| 3 | > 8-16 | CEM I 52,5 | 2,3 | 8,1 | 1,5 | 1,9 | 14,6 | 2,4 | 2,5 |
| 4 | > 0-4 | CEM III/A 52,5 | 2,4 | n.d. | 3,2 | 4,1 | 31,5 | n.d. | n.d. |
| 5 | > 4-8 | CEM III/A 52,5 | 2,3 | 8,0 | 1,5 | 1,9 | 14,6 | n.d. | n.d. |
| 6 | > 8-16 | CEM III/A 52,5 | 2,2 | 7,9 | 1,5 | 1,9 | 14,5 | 2,6 | 2,9 |
| 7 | > 0-4 | CEM I 52,5 | 2,3 | n.d. | 5,5 | 7,0 | 53,9 | n.d. | n.d. |
| 8 | > 4-8 | CEM I 52,5 | 2,3 | 8,9 | 3,1 | 3,9 | 30,2 | 2,5 | 3,2 |
| 9 | > 8-16 | CEM I 52,5 | 2,3 | 8,1 | 3,8 | 4,9 | 37,5 | 2,5 | 3,2 |
| 10 | > 0-4 | CEM III/A 52,5 | 2,4 | n.d. | 5,8 | 7,4 | 56,6 | n.d. | n.d. |
| 11 | > 4-8 | CEM III/A 52,5 | 2,3 | 8,0 | 3,1 | 3,9 | 30,3 | 2,4 | 2,9 |
| 12 | > 8-16 | CEM IIIIA 52,5 | 2,2 | 7,9 | 5,5 | 7,0 | 53,7 | 2,4 | 2,9 |

## Patentansprüche

1. Verfahren zur Herstellung von Zuschlagstoffen sowie von Kalziumcarbonat aus Beton-Gesteinskörnung in Form von rezykliertem, zerkleinerten Beton, das die folgenden Merkmale umfasst:
1.1 Eingabe von Beton-Gesteinskörnung umfassendem Schüttgut (9) in einen Reaktionsraum (7);
1.2 Zuleiten eines Kohlenstoffdioxid umfassenden Gases in den Reaktionsraum (7);
1.3 Zerkleinern des Schüttgutes (9) in dem Reaktionsraum (7);
1.4 Reagierenlassen der Beton-Gesteinskörnung und des Kohlenstoffdioxid umfassenden Gases miteinander zu Reaktionsprodukten (23) in dem Reaktionsraum (7);
1.5 Bewegen des Schüttgutes (9) durch ein Wasserbad während des Zerkleinerns und Reagierenlassens;
1.6 Ausführen der Reaktionsprodukte (23) aus dem Reaktionsraum (7).

2. Verfahren nach Anspruch 1, bei dem das Schüttgut (9) und das Kohlenstoffdioxid umfassende Gas in entgegengesetzten Strömungsrichtungen durch den Reaktionsraum (7) geleitet werden.

3. Verfahren nach wenigstens einem der vorhergehenden Ansprüche, bei dem das Reagierenlassen der Beton-Gesteinskörnung des Schüttgutes (9) und des Kohlenstoffdioxid umfassenden Gases zu Reaktionsprodukten bei einer Temperatur in einem Temperaturbereich von 60 bis kleiner 90°C erfolgt.

4. Verfahren nach wenigstens einem der vorhergehenden Ansprüche, bei dem dem Reaktionsraum (7) ein Kohlenstoffdioxid umfassendes Verbrennungsgas zugeleitet wird.

5. Verfahren nach wenigstens einem der vorhergehenden Ansprüche, bei dem das Schüttgut (9) während des Zerkleinerns und Reagierenlassens derart mit Wasser getränkt wird, dass die Beton-Gesteinskörnung zu wenigstens 90 %, bezogen auf die zur vollständigen Sättigung der Beton-Gesteinskörnung mit Wasser notwendigen Masse an Wasser, mit Wasser gesättigt ist.

6. Verfahren nach wenigstens einem der vorhergehenden Ansprüche, bei dem das Schüttgut (9) zu wenigstens 90 Masse-% Beton-Gesteinskörnung umfasst, bezogen auf die Masse des Schüttgutes (9).

7. Verfahren nach wenigstens einem der vorhergehenden Ansprüche, bei dem die Beton-Gesteinskörnung aus Zementstein und Zuschlag gebildet ist.

8. Verfahren nach wenigstens einem der vorhergehenden Ansprüche, bei dem das aus dem Reaktionsraum (7) ausgeführte Kalziumcarbonat zu Kalziumoxid kalziniert wird.

## Claims

1. A method for producing aggregate materials and calcium carbonate from concrete aggregate in the form of recycled, comminuted concrete, said method comprising the following features:
1.1 introducing bulk material (9) comprising concrete aggregate into a reaction chamber (7);
1.2 feeding a gas comprising carbon dioxide into the reaction chamber (7);
1.3 comminuting the bulk material (9) in the reaction chamber (7);
1.4 leaving the concrete aggregate and the gas comprising carbon dioxide to react with one another to form reaction products (23) in the reaction chamber (7);
1.5 moving the bulk material (9) through a water bath during the comminution and the reaction period;
1.6 removing the reaction products (23) from the reaction chamber (7).

2. The method according to Claim 1, wherein the bulk material (9) and the gas comprising carbon dioxide are conducted through the reaction chamber (7) in opposite directions.

3. The method according to at least one of the preceding claims, wherein the concrete aggregate of the bulk material (9) and the gas comprising carbon dioxide are left to react with one another so as to form reaction products at a temperature in a temperature range from 60 to less than 90 °C.

4. The method according to at least one of the preceding claims, wherein a combustion gas comprising carbon dioxide is fed to the reaction chamber (7).

5. The method according to at least one of the preceding claims, wherein the bulk material (9) is saturated with water during the comminution and the reaction period, such that the concrete aggregate is saturated with water to an extent of at least 90 % in relation to the mass of water necessary for complete saturation of the concrete aggregate with water.

6. The method according to at least one of the preceding claims, wherein the bulk material (9) comprises concrete aggregate to an extent of at least 90 mass % in relation to the mass of the bulk material (9).

7. The method according to at least one of the preceding claims, wherein the concrete aggregate is formed from hardened cement paste and aggregate.

8. The method according to at least one of the preceding claims, wherein the calcium carbonate removed from the reaction chamber (7) is calcined to form calcium oxide.

## Revendications

1. Procédé de fabrication d'agrégats ainsi que de carbonate de calcium à partir de granulat de béton sous la forme de béton broyé recyclé, qui comprend les caractéristiques suivantes :
1.1 Introduction de matériau en vrac (9) comprenant de granulat de béton dans un espace de réaction (7),
1.2 Acheminement d'un gaz comprenant du dioxyde de carbone dans l'espace de réaction (7),
1.3 Broyage du matériau en vrac (9) dans l'espace de réaction (7),
1.4 Reprise de réaction du granulat de béton et du gaz comprenant du dioxyde de carbone entre eux en produits de réaction (23) dans l'espace de réaction (7),
1.5 Déplacement du matériau en vrac (9) à travers un bain d'eau pendant le broyage et la reprise de réaction ;
1.6 Extraction des produits de réaction (23) de l'espace de réaction (7).

2. Procédé selon la revendication 1 pour lequel le matériau en vrac (9) et le gaz comprenant du dioxyde de carbone sont dirigés à travers l'espace de réaction (7) dans des directions d'écoulement opposées.

3. Procédé selon au moins l'une quelconque des revendications précédentes, pour lequel la reprise de réaction du granulat de béton du matériau en vrac (9) et du gaz comprenant du dioxyde de carbone en produits de réaction a lieu à une température se situant dans une gamme de températures de 60 à moins de 90 °C.

4. Procédé selon au moins l'une quelconque des revendications précédentes, pour lequel un gaz de combustion comprenant du dioxyde de carbone est ajouté à l'espace de réaction (7).

5. Procédé selon au moins l'une quelconque des revendications précédentes, pour lequel le matériau en vrac (9) est imbibé d'eau pendant le broyage et la reprise de réaction de telle manière que le granulat de béton est saturé en eau à au moins 90 % par rapport à la masse en eau nécessaire à la saturation complète du granulat de béton avec de l'eau.

6. Procédé selon au moins l'une quelconque des revendications précédentes, pour lequel le matériau en vrac (9) comprend au moins 90 % de la masse en granulat de béton par rapport à la masse du matériau en vrac (9).

7. Procédé selon au moins l'une quelconque des revendications précédentes, pour lequel le granulat de béton sont formé de pâte de ciment durcie et d'agrégats.

8. Procédé selon au moins l'une quelconque des revendications précédentes, pour lequel le carbonate de calcium sorti de l'espace de réaction (7) est calciné en oxyde de calciuum.
